Europäisches Patentamt

European Patent Office

Office européen des brevets

(19)

(11) Veröffentlichungsnummer : **0 149 073**
**B1**

## (12) EUROPÄISCHE PATENTSCHRIFT

(45) Veröffentlichungstag der Patentschrift :
09.11.88

(51) Int. Cl.⁴ : **B 60 J   3/02**

(21) Anmeldenummer : 84114371.2

(22) Anmeldetag : 28.11.84

(54) **Sonnenblende für Fahrzeuge.**

(30) Priorität : 17.12.83 DE 3345764

(43) Veröffentlichungstag der Anmeldung :
24.07.85 Patentblatt 85/30

(45) Bekanntmachung des Hinweises auf die Patenterteilung : 09.11.88 Patentblatt 88/45

(84) Benannte Vertragsstaaten :
DE FR GB IT SE

(56) Entgegenhaltungen :
EP-A- 0 068 269
FR-A- 2 490 560
US-A- 3 032 371

(73) Patentinhaber : Gebr. Happich GmbH
Postfach 10 02 49 Clausenbrücke 1
D-5600 Wuppertal 1 (DE)

Daimler Benz Aktiengesellschaft
Stuttgart-Untertürkheim Postfach 202
D-7000 Stuttgart 60 (DE)

(72) Erfinder : Kaiser, Klaus-Peter
Sellscheid 42
D-5632 Wermelskirchen (DE)
Erfinder : Viertel, Lothar
Jutta von Hattstein-Strasse 41
D-6636 Berus Überherrn (DE)
Erfinder : Zweigart, Gerhard, Ing.
Hauptstrasse 71
D-7031 Aidlingen (DE)

EP 0 149 073 B1

## Beschreibung

Die Erfindung bezieht sich auf eine Sonnenblende für Fahrzeuge, im wesentlichen bestehend aus einem Sonnenblendenkörper, einem darin im Bereich einer Längskante eingelagerten Drehlagergehäuse und einer etwa L-förmig ausgebildeten Tragachse, deren kurzer Achsschenkel von einem Schwenklagergehäuse und deren langer, zumindest eine durchlaufende Abflachung aufweisender Achsschenkel von einer als Gleitlager dienenden, im Innern dem Querschnittsprofil des langen Achsschenkels angepaßten Hülse aufgenommen ist, die ihrerseits verschiebefest im Drehlagergehäuse angeordnet ist, welches im Hülsenaufnahmebereich zumindest eine fensterartige Öffnung aufweist, wobei der Sonnenblendenkörper sowohl drehbar als auch verschiebbar auf dem langen Achsschenkel der Tragachse gelagert ist.

Sonnenblenden für Fahrzeuge sind im allgemeinen oberhalb der Windschutzscheiben angeordnet und können durch die Lagerung des langen Achsschenkels im Drehlagergehäuse vor die Windschutzscheibe geklappt werden, um einen Schutz vor von vorne kommender Blendung zu bieten. Das Schwenklager bietet zudem die Möglichkeit, den Sonnenblendenkörper zu einer Fahrzeugseitenscheibe zu schwenken, in welcher Lage ein Schutz gegen seitlich ins Fahrzeug einfallende Lichtstrahlen erzielt wird. Damit sich Fahrer und Beifahrer eines Fahrzeuges besser vor einfallenden Sonnenstrahlen oder anderen Lichtquellen schützen können, ist bei einer bekannten Sonnenblende zusätzlich eine axiale Verschiebbarkeit des Sonnenblendenkörpers auf dem langen Achsschenkel der Tragachse vorgesehen.

Eine Sonnenblende der vorstehend angegebenen Art ist in den Unterlagen der DE-A-1 630 343 beschrieben. Das Drehlagergehäuse besteht hier aus einer rohrförmig ausgebildeten Spannschelle mit an einer aus einem Drahtrahmen gebildeten, den Sonnenblendenkörper aussteifenden Verstärkungseinlage befestigten Flanschen, und die Spannschelle nimmt zumindest eine aus einem Rohrstück gebildete Traghülse auf, in welche der lange Achsschenkel der Tragachse eingreift. Die Spannschelle weist eine Öffnung zur Aufnahme eines aus der Traghülse freigeschnittenen und herausgebogenen Lappens auf und kann sich dadurch gegenüber der Traghülse nicht axial bewegen, ihr gegenüber jedoch drehen. In der Öffnung der Traghülse sind Segmentstücke befestigt, die an Abflachungen des langen Achsschenkels anliegen, so daß die Traghülse undrehbar, jedoch axial verschiebbar am langen Achsschenkel festgelegt ist. Die radiale und axiale Stellung des Sonnenblendenkörpers ist bei dieser bekannten Konstruktion durch Klemmwirkung selbsttätig feststellbar, wobei zum Erreichen der Klemmwirkung weiterhin vorgesehen ist, die Traghülse, ausgehend von der durch den herausgebogenen Lappen gebildeten Öffnung bis zu einem Hülsenende zu schlitzen und über der Spannschelle noch eine Klemmschelle mit einer Stellschraube anzuordnen, durch die der geschlitzte Bereich der Traghülse, in dem auch die Segmentkörper befestigt sind, eingeengt werden kann.

Ausgehend von einer Sonnenblende der eingangs näher erwähnten Art ist es nun Aufgabe der Erfindung, die für das Klappen des Sonnenblendenkörpers um den langen Achsschenkel, wie auch die für das Verschieben des Sonnenblendenkörpers auf dem langen Achsschenkel erforderlichen Elemente zu vereinfachen und zu verbilligen und insbesondere dafür Vorsorge zu treffen, daß eine wartungsfreie, klapperfreie und leichtgängige Lagerung des Sonnenblendenkörpers realisiert wird.

Gemäß der Erfindung wird diese Aufgabe dadurch gelöst, daß auf dem freien Endbereich des langen Achsschenkels ein im Drehlagergehäuse spielfrei geführter Gleitkörper sitzt, daß die Hülse an ihren Endbereichen Schultern und in dem zwischen diesen befindlichen Bereich zumindest eine sich axial erstreckende Abflachung aufweist, und daß das Drehlagergehäuse reiterartig von einer etwa U-förmig ausgebildeten Feder übergriffen ist, die mit zumindest einem, die fensterartige Öffnung durchgreifenden Schenkel die Hülse in dem zwischen den Schultern befindlichen Bereich beaufschlagt. Vorzugsweise ist weiterhin vorgesehen, daß die Hülse an ihren Enden angeordnete Gleitansätze aufweist, die spielfrei auf dem langen Achsschenkel geführt sind.

Durch die erfindungsgemäßen Maßnahmen ist eine Sonnenblende mit optimalen Gebrauchseigenschaften geschaffen worden. Von besonderem Vorteil ist dabei, daß der lange Achsschenkel im Gleitsitz und spielfrei im Drehlagergehäuse angeordnet ist und daß die Hülse mit den daran angeordneten Gleitansätzen ebenfalls im Gleitsitz und spielfrei auf dem langen Achsschenkel geführt ist ; denn hierdurch ergibt sich eine günstige Aufteilung der Gleitlagerung und damit eine klapperfreie und leichtgängige Verschiebbarkeit des Sonnenblendenkörpers und ein Verkanten oder ein dadurch bedingtes Ausschlagen der Gleitlager ist ausgeschlossen. Durch die Maßnahme, die drehfest auf dem langen Achsschenkel angeordnete Hülse mit Ringschultern auszurüsten, wird im Zusammenwirken mit der die Hülse beaufschlagenden Feder zum einen ihre axiale Festlegung in bezug auf das Drehlagergehäuse und zum andern bewirkt, daß der Sonnenblendenkörper in der jeweiligen Klapplage gehalten wird. Die sich zwischen den Ringschultern der Hülse erstreckende Abflachung definiert darüber hinaus eine Endrastung, die den Sonnenblendenkörper zum Beispiel in der hochgeklappten Nichtgebrauchslage hält.

Der Sonnenblendenkörper läßt sich völlig geräuschfrei in axialer Richtung des langen Achsschenkels hin und her verschieben und ebenso geräuschfrei auch um den Achsschenkel drehen, wenn, wie es in bevorzugter Ausgestaltung der Erfindung vorgesehen ist, der Gleitkörper und die Gleitansätze aus Kunststoff-Spritzlingen mit hoher Gleiteigenschaft und hoher Abriebfestigkeit bestehen.

Vorteilhafterweise sind die Gleitansätze unmittelbar an die Endbereiche der Hülse aufgespritzt und weisen einen dem Querschnittsprofil des langen Achsschenkels entsprechenden Öffnungsquerschnitt auf. Weiterhin können bevorzugterweise die Ringschultern an der Hülse durch die ebenfalls eine Hülsenform aufweisenden Gleitansätze gebildet sein. Diese Maßnahmen dienen der einfachen, kostensparenden Herstellung ; denn auf diese Weise brauchen die Gleitansätze nicht separat hergestellt und montiert zu werden und insbesondere macht diese Maßnahme eine mechanische Bearbeitung der Hülse unnötig, die nach einem weiteren Merkmal der Erfindung aus einem metallischen Werkstoff besteht und einen Innendurchmesser aufweist, der größer als der Durchmesser des langen Achsschenkels ist.

Im allgemeinen ist der Sonnenblendenkörper mit einem Stirnende dem kurzen Achszapfen unmittelbar benachbart und er wird nur im Bedarfsfalle aus seiner Normallage verschoben. Um den Sonnenblendenkörper nun in der vorstehend erläuterten Normallage zu halten bzw. gegen ungewolltes Verschieben zu sichern, ist in Ausgestaltung der Erfindung vorgesehen, daß der lange Achsschenkel an seinem freien Endbereich einen in eine Aufnahme druckknopfartig ein- und ausrastbaren Klipskörper trägt. Bevor der Sonnenblendenkörper ausgezogen werden kann, ist zunächst der druckknopfartige Widerstand, der nicht besonders groß sein sollte, zu überwinden. Die Druckknopfrastung ist vorzugsweise so ausgelegt, daß zumindest beim Einrasten ein Knackgeräusch entsteht.

Die Aufnahme für den Klipskörper besteht zweckmäßigerweise aus einer mit einer inneren Einschnürung versehenen Stecköffnung, die in einem am Endbereich des Drehlagergehäuses befestigten Stopfen ausgebildet ist. Weiterhin kann in diesem Zusammenhang vorgesehen sein, daß der lange Achsschenkel an seinem freien Endbereich eine stufenförmige, in einen Pilzkopf übergehende Absetzung aufweist, welche von einem nach innen gerichteten Kragen des Gleitkörpers hintergriffen wird und daß an dem kragenseitigen Ende des Gleitkörpers eine verschiebefest auf dem Pilzkopf sitzende Tülle anliegt, welche den Klipskörper bildet. Die Tülle erfüllt damit eine Doppelfunktion ; denn sie sichert den Gleitkörper gegen ein axiales Verschieben und sie dient gleichzeitig als Klipskörper. Eine Weiterbildung der Erfindung sieht allerdings vor, den Gleitkörper einstückig mit der Tülle auszubilden.

In weiterer vorteilhafter Ausgestaltung der Erfindung weist das Drehlagergehäuse eine einen spielfreien Gleitsitz des Gleitkörpers ermöglichende glatte Innenwandung auf. Das Drehlagergehäuse besteht dabei zweckmäßigerweise aus dem Abschnitt eines Rundrohres oder alternativ aus dem Abschnitt eines Strangpreßprofils, welches einen in sich geschlossenen Rohrkörper und zwei an dessen Mantel sitzende Flansche umfaßt, wobei zwischen den Flanschen axial verlaufende Bereiche einer im Sonnenblendenkörper eingelagerten Versteifungseinlage befestigt sind.

Schließlich kann der Erfindung zufolge noch vorgesehen sein, daß in das dem kurzen Achsschenkel benachbarte Drehlagerende des Drehlagergehäuses ein eine Bohrung aufweisender Führungskörper eingesetzt ist, wobei der Bohrungsdurchmesser auf den Durchmesser des langen Achsschenkels abgestimmt ist.

Ein Ausführungsbeispiel der Erfindung wird nachfolgend anhand der Zeichnungen näher erläutert. Es zeigen

Fig. 1 eine Gesamtansicht der Sonnenblende,
Fig. 2 eine Explosivdarstellung der Sonnenblende unter Weglassung der Umpolsterung,
Fig. 3 einen Schnitt III-III nach Fig. 2 und
Fig. 4 einen Schnitt IV-IV nach Fig. 2.

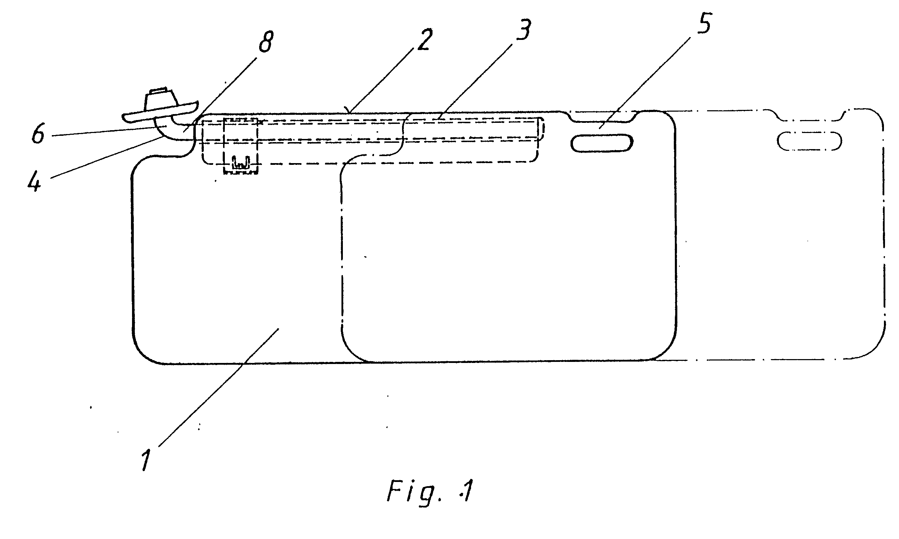

Die neue Sonnenblende besteht aus einem Sonnenblendenkörper 1, der im Bereich seiner oberen Längskante 2 ein Drehlagergehäuse 3 mit einer Tragachse 4 und einen Achszapfen 5 zum lösbaren Einrasten in ein nicht dargestelltes Gegenlagergehäuse aufweist. Die Tragachse 4 besitzt eine etwa L-förmige Ausbildung, deren kurzer Achsschenkel 6 von einem Schwenklagergehäuse 7 und deren langer Achsschenkel 8 vom Drehlagergehäuse 3 aufgenommen ist. Der Sonnenblendenkörper 1 ist üblicherweise auf dem langen Achsschenkel 8 der Tragachse 4 in der in Fig. 1 mit ausgezogenen Linien dargestellten Lage angeordnet. Damit sich Fahrer und Beifahrer eines Fahrzeuges besser vor einfallenden Sonnenstrahlen oder anderen Lichtquellen schützen können, ist eine in Fig. 1 mit gestrichelten Linien angedeutete verschiebbare Anordnung des Sonnenblendenkörpers 1 auf dem langen Achsschenkel 8 vorgesehen.

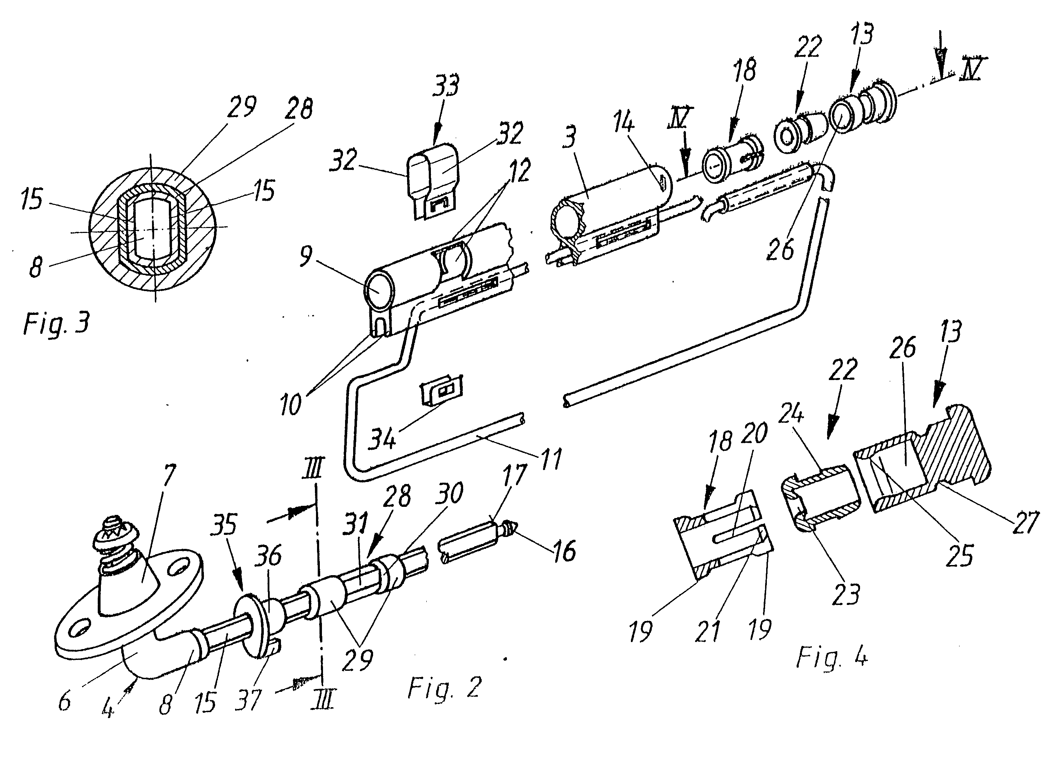

Die für die verschiebbare Lagerung des Sonnenblendenkörpers 1 getroffenen Maßnahmen werden nun anhand von Fig. 2 bis 4 näher erläutert. Begonnen wird dabei zunächst mit dem Drehlagergehäuse 3, welches hier aber auch gleichzeitig die Funktion eines Gleitlagergehäuses erfüllt. Das Drehlagergehäuse 3 besteht nun aus dem Abschnitt eines aus metallischem Werkstoff, vorzugsweise Aluminium gebildeten Strangpreßkörpers mit einer glattwandigen Durchgangsbohrung 9 und mit zwei am Mantel durchlaufend angeformten Flanschen 10. Zwischen den Flanschen 10 sind Bereiche einer aus einem Drahtrahmen 11 gebildeten Verstärkungseinlage, die den Sonnenblendenkörper aussteift, befestigt. Im vorderen, dem kurzen Achsschenkel 6 zugewandten Endbereich weist das Drehlagergehäuse 3 zwei einander gegenüberliegende fensterartige Öffnungen 12 auf. Am hinteren, dem Achszapfen 5 zugewandten Ende des Drehlagergehäuses 3 ist die Durchgangsbohrung 9 durch einen Stopfen 13 verschlossen, wobei der Stopfen 13 durch eine durch zumindest eine Sicke 14 gebildete Einschnürung gegen Herausziehen gesichert wird.

Die Tragachse 4 greift mit ihrem kurzen Achsschenkel 6 in das an einer Fahrzeugkarosserie zu befestigende Schwenklagergehäuse 7 ein und ist in diesem in axialer Richtung gesichert, jedoch drehbeweglich angeordnet, so daß der Sonnenblendenkörper 1 aus einer vor der Windschutzscheibe befindlichen Lage auch zu der dem Schwenklagergehäuse 7 benachbarten Seitenscheibe hin geschwenkt werden kann. Der lange Achsschenkel 8, der zum Eingreifen in die Durchgangsbohrung 9 des Drehlagergehäuses 3 bestimmt ist, weist zwei einander diametral gegenüberliegende durchlaufende Abflachungen 15 und am freien Endbereich eine in einen Pilzkopf 16 übergehende Absetzung 17 auf.

An dem freien Endbereich trägt der lange Achsschenkel 8 einen als Kunststoff-Spritzgußteil ausgebildeten Gleitkörper 18 mit Gleitringflächen 19. Der Gleitkörper 18 ist über einen hinteren axialen Teilbereich mit Schlitzen 20 versehen, die es ermöglichen, daß ein hinterendig angeformter, nach innen gerichteter Kragen 21 über den Pilzkopf 16 gezogen und zur Anlage an die Absetzung 17 gebracht werden kann. Der Gleitkörper 18 ist spielfrei in der Durchgangsbohrung 9 geführt.

Auf den Pilzkopf 16 ist eine aus einem Kunststoff-Spritzgußteil bestehende Tülle 22 aufgeklipst, die mit einem den Pilzkopf 16 hintergreifenden inneren Klipsring 23 und mit einem äußeren Ringwulst 24 ausgebildet ist. Die Tülle 22 dient zum einen zur axialen Festlegung des Gleitkörpers 18 auf dem langen Achsschenkel 8 und bildet gleichzeitig einen Klipskörper zum druckknopfartigen Ein- und Ausrasten in eine mit einem Gegenwulst 25 ausgebildete Aufnahme 26 im Stopfen 13, der auch eine Ringnut 27 für die Sicken 14 aufweist.

In die Durchgangsbohrung 9 ist eine Hülse 28 eingesetzt, welche an ihren Enden angeordnete Gleitansätze 29 aufweist, die unmittelbar an die Endbereiche der Hülse 28 als Kunststoff-Spritzgußkörper aufgespritzt sind und einen dem Querschnittsprofil des langen Achsschenkels 8 entsprechenden Öffnungsquerschnitt aufweisen und die damit im Gleitsitz und spielfrei auf dem langen Achsschenkel 8 geführt sind (vgl. Fig. 3). Die Hülse 28 weist an ihren Endbereichen Ringschultern 30, die durch die Gleitansätze 29 gebildet sind, und in dem zwischen diesen befindlichen Bereich Abflachungen 31 auf, die parallel mit den Abflachungen 15 des langen Achsschenkels 8 verlaufen (Fig. 3). Die in die Durchgangsbohrung 9 eingesetzte Hülse 28 mit den daran angeformten Gleitansätzen 29 wird in dem zwischen den Gleitansätzen 29 befindlichen Bereich durch die Schenkel 32 einer U-förmig ausgebildeten Feder 33 beaufschlagt, welche reiterartig das Drehlagergehäuse 3 übergreift und welche mit ihren Schenkeln 32 die fensterartigen Öffnungen 12 im Drehlagergehäuse 3 durchgreift. Die freien Endbereiche der Federschenkel 32 sind durch ein U-förmig ausgebildetes Sicherungselement 34 aneinander festgelegt. Die Feder 33 dient, wenn die Schenkel 32 mit den Abflachungen 31 zusammenfallen, als Endrastung (Sicherung des Sonnenblendenkörpers in der Gebrauchslage bzw. Nichtgebrauchslage) und im übrigen Beaufschlagungsbereich als Reibungsbremse, die den Sonnenblendenkörper in der jeweiligen Klapplage hält und schließlich noch dazu, die Hülse gegen ein axiales Verschieben innerhalb des Drehlagergehäuses 3 zu sichern.

Der vordere Abschluß des Drehlagergehäuses 3 wird durch einen eine auf das Querschnittsprofil des langen Achsschenkels 8 abgestimmte Bohrung aufweisenden Führungskörper 35 gebildet. Der Führungskörper 35, der aus einem Kunststoff-Spritzgußteil besteht, weist einen in die Durchgangsbohrung 9 eingreifenden Zapfen 36 und einen zwischen die Flansche 10 greifenden und durch Klemmwirkung gehaltenen Nocken 37 auf.

Beim Zusammenbau wird zweckmäßigerweise wie folgt vorgegangen : Zunächst wird der Drahtrahmen 11 am Drehlagergehäuse 3 befestigt. Die Tülle 22 wird in den Stopfen 13 eingeknöpft und diese Einheit wird in das hintere Ende der Durchgangsbohrung 9 eingesetzt und durch Sicken 14 festgelegt. In das vordere Ende der Durchgangsbohrung 9 wird sodann zunächst der Gleitkörper 18 und hierauf die Hülse 28 eingeschoben und die Hülse 28 wird sodann durch Aufstecken der Feder 33, die zuvor gefettet wird, gegen axiales Verschieben gesichert. Die Feder 33 wird hiernach durch Aufsetzen des Sicherungselements 34 vervollständigt. Schließlich erfolgt das Einsetzen des Führungskörpers. Auf die so vorbereitete Baueinheit wird nun in üblicher Weise die Umpolsterung und gegebenenfalls Folienumhüllung aufgebracht. Alsdann verbleibt lediglich noch die Montage der Tragachse, deren langer Schenkel nun durch den Führungskörper 35, durch die Hülse 28 mit Gleitansätzen 29 und durch den Gleitkörper 18 geschoben wird. Durch einen kleinen Schlag wird noch der Pilzkopf 16 in die Tülle 22 eingeklipst und damit der Montagevorgang beendet.

**Patentansprüche**

1. Sonnenblende für Fahrzeuge, im wesentlichen bestehend aus einem Sonnenblendenkörper (1), einem darin im Bereich einer Längskante (2) eingelagerten Drehlagergehäuse (3) und einer etwa L-förmig ausgebildeten Tragachse (4), deren kurzer Achsschenkel (6) von einem Schwenklagergehäuse (7) und deren langer, zumindest eine durchlaufende Abflachung (15) aufweisender Achsschenkel (8) von einer als Gleitlager dienenden, im Innern dem Querschnittsprofil des langen Achsschenkels (8) angepaßten Hülse (28) aufgenommen ist, die ihrerseits verschiebefest im Drehlagergehäuse (3) angeordnet ist, welches im Hülsenaufnahmebereich zumindest eine fensterartige Öffnung (12) aufweist, wobei der Sonnenblendenkörper (1) sowohl drehbar als auch verschiebbar auf dem langen Achsschenkel (8) der Tragachse (4) gelagert ist, dadurch gekennzeichnet, daß auf dem freien Endbereich des langen Achsschenkels (8) ein im Drehlagergehäuse (3) spielfrei geführter Gleitkörper (18) sitzt, daß die Hülse (28) an ihren Endbereichen Schultern (30) und in dem zwischen diesen befindlichen Bereich zumindest eine sich axial erstreckende Abflachung (31) aufweist, und daß das Drehlagergehäuse (3) reiterartig von einer etwa U-förmig ausgebildeten Feder (33) übergriffen ist, die mit zumindest einem, die fensterartige Öffnung (12) durchgreifenden Schenkel (32) die Hülse (28) in dem zwischen den Schultern (30) befindlichen Bereich beaufschlagt.

2. Sonnenblende nach Anspruch 1, dadurch gekennzeichnet, daß die Hülse (28) an ihren Enden angeordnete Gleitansätze (29) aufweist, die spielfrei auf dem langen Achsschenkel (8) geführt sind.

3. Sonnenblende nach Anspruch 1 oder 2, dadurch gekennzeichnet daß der Gleitkörper (18) und die Gleitansätze (29) aus Kunststoff-Spritzlingen mit hoher Gleiteigenschaft und hoher Abriebfestigkeit bestehen.

4. Sonnenblende nach Anspruch 1, 2 oder 3, dadurch gekennzeichnet, daß die Gleitansätze (29) unmittelbar an die Endbereiche der Hülse (28) aufgespritzt sind und einen dem Querschnittsprofil des langen Achsschenkels (8) entsprechenden Öffnungsquerschnitt aufweisen.

5. Sonnenblende nach einem der Ansprüche 1 bis 4, dadurch gekennzeichnet, daß der Innendurchmesser der aus einem metallischen Werkstoff bestehenden Hülse (28) größer als der Durchmesser des langen Achsschenkels (8) ist.

6. Sonnenblende nach einem der Ansprüche 1 bis 5, dadurch gekennzeichnet, daß die Schultern (30) an der Hülse (28) durch die ebenfalls eine Hülsenform aufweisenden Gleitansätze (29) gebildet sind.

7. Sonnenblende nach einem der Ansprüche 1 bis 6, dadurch gekennzeichnet, daß der lange Achsschenkel (8) an seinem freien Endbereich einen in eine Aufnahme (26) druckknopfartig ein- und ausrastbaren Klipskörper trägt.

8. Sonnenblende nach Anspruch 7, dadurch gekennzeichnet, daß die Aufnahme (26) aus einer mit einer inneren Einschnürung (25) versehenen Stecköffnung besteht, die in einem am Endbereich des Drehlagergehäuses (3) befestigten Stopfen (13) ausgebildet ist.

9. Sonnenblende nach Anspruch 7 oder 8, dadurch gekennzeichnet, daß der lange Achsschenkel (8) an seinem freien Endbereich eine stufenförmige, in einen Pilzkopf (16) übergehende Absetzung (17) aufweist, welche von einem nach innen gerichteten Kragen (21) des Gleitkörpers (18) hintergriffen wird und daß an dem kragenseitigen Ende des Gleitkörpers (18) eine verschiebefest auf dem Pilzkopf (16) sitzende Tülle (22) anliegt, welche den Klipskörper bildet.

10. Sonnenblende nach Anspruch 9, dadurch gekennzeichnet, daß der Gleitkörper (18) einstückig mit der Tülle (22) ausgebildet ist.

11. Sonnenblende nach einem der Ansprüche 1 bis 10, dadurch gekennzeichnet, daß das Drehlagergehäuse (3) eine einen spielfreien Gleitsitz des Gleitkörpers (18) ermöglichende glatte Innenwandung aufweist.

12. Sonnenblende nach einem der Ansprüche 1 bis 11, dadurch gekennzeichnet, daß das Drehlagergehäuse (3) aus einem Abschnitt eines Rundrohres besteht.

13. Sonnenblende nach einem der Ansprüche 1 bis 11, dadurch gekennzeichnet, daß das Drehlagergehäuse (3) aus einem Abschnitt eines Strangpreßprofils besteht, welches einen in sich geschlossenen Rohrkörper und zwei an dessen Mantel sitzende Flansche (10) umfaßt, wobei zwischen den Flanschen (10) Bereiche einer im Sonnenblendenkörper (1) eingelagerten Versteifungseinlage (11) befestigt sind.

14. Sonnenblende nach einem der Ansprüche 1 bis 13, dadurch gekennzeichnet, daß in das dem kurzen Achsschenkel (6) benachbarte Drehlagerende ein eine Bohrung aufweisender Führungskörper (35) eingesetzt ist, wobei der Bohrungsdurchmesser auf den Durchmesser des langen Achsschenkels (8) abgestimmt ist.

**Claims**

1. A sun visor for a vehicle, the visor comprising a sun visor body (1), a pivot bearing shell (3) embedded in the visor body in the vicinity of one of the longitudinal edges (2) thereof, and a substantially L-shaped supporting shaft (4) the short leg (6) of which is mounted in a swivel bearing shell (7) and its long leg (8) — having at least one uninterrupted flat (15) — in a bush (28), which serves as a slide bearing and the internal contour of which matches the cross-sectional contour of the shaft's long leg (8), in which the bush, in turn, is carried, slidably fast, in the pivot bearing shell (3) which is provided in its bush-carrying region with at least one window-like opening (12), in which the visor body (1) is pivotably an slidably mounted on the long leg (8) of the supporting shaft (4), characterized in that a slider (18) guided free from play in the pivot bearing shell (3) is arranged on the free end portion of the long shaft leg (8), that the bush (28) is provided on each of its end portions with a shoulder (30) and in the space between the shoulders with at least one axially extending flat (31), in that a substantially U-shaped spring (33) straddlingly overlaps the pivot bearing shell (3), and in that at least one of the spring's legs (32) extends through the window-like opening (12) and acts on the bush (28) in the space thereof between the shoulders (30).

2. A sun visor according to claim 1, characterized in that the bush (28) is provided with sliding rims (29), one arranged at each of its ends and guided free from play on the long shaft leg (8).

3. A sun visor according to claim 1 or claim 2, characterized in that the slider (18) and the sliding rims (29) are components injection-moulded of a plastics material of high antifriction properties and high abrasive resistance.

4. A sun visor according to any of the claims 1 to 3, characterized in that the sliding rims (29) are moulded directly onto the respective ends of the bush (28), and in that the cross-section of each rim's aperture matches the cross-sectional contour of the long shaft leg (8).

5. A sun visor according to any of the claims 1 to 4, characterized in that the internal diameter of the bush (28), which is made of a metallic material, is greater than the diameter of the long shaft leg (8).

6. A sun visor according to any of the claims 1 to 5, characterized in that the shoulders (30) on the bush (28) are formed by the sliding rims (29) which are also bush-shaped.

7. A sun visor according to any of the claims 1 to 6, characterized in that the long shaft leg (8) carries on its free end portion a latch engageable like a press stud in and disengageable from a receptacle (26).

8. A sun visor according to claim 7, characterized in that the receptacle (26) is a plug-in hole having an internal constriction (25), and in that the hole is formed in a stopper (13) fastened to the end portion of the pivot bearing shell (3).

9. A sun visor according to claim 7 or claim 8, characterized in that the free end portion of the long shaft leg (8) has a step-shaped reduction (17) terminated by a mushroom head (16), that the step-shaped reduction is clamped by an inwardly extending collar (21) of the slider (18), and in that a socket (22) mounted slidably fast on the mushroom head (16) and forming the latch rests against the slider's (18) end provided with the collar.

10. A sun visor according to claim 9, characterized in that the slider (18) and the socket (22) are combined to form a one-piece component.

11. A sun visor according to any of the claims 1 to 10, characterized in that the inside wall of the pivot bearing shell (3) is smooth so as to provide a slide fit free from play for the slider (18).

12. A sun visor according to any of the claims 1 to 11, characterized in that the pivot bearing shell (3) is a length of round tubing.

13. A sun visor according to any of the claims 1 to 11, characterized in that the pivot bearing shell (3) is a length of an extrusion comprising a self-contained tubular body and two flanges (10) extending from the outer surface thereof, and in that a section, or sections, of a reinforcing insert (11) embedded in the visor body (1) are clamped between the flanges (10).

14. A sun visor according to any of the claims 1 to 13, characterized in that a bored guide (35) is inserted into the pivot bearing shell at the end thereof closest to the short shaft leg (6), and in that the diameter of the bore matches the external diameter of the long shaft leg (8).

## Revendications

1. Pare-soleil pour véhicules automobiles, constitué essentiellement par un corps de pare-soleil (1), un logement de palier tournant (3) incorporé dans la région d'un bord longitudinal (2) et un axe de support (4) constitué sensiblement en forme de L, dont la branche courte (6) est reçue dans un logement de palier pivotant (7) et dont la branche longue (8) qui comprend au moins un à-plat continu (15) est reçue dans une douille (28) servant de palier de glissement et adaptée à l'intérieur au profil en section transversale de la branche longue (8) de l'axe, qui est disposée de son côté de façon à pouvoir se déplacer longitudinalement dans le logement de palier tournant (3) qui comprend dans la région de réception de la douille au moins une ouverture (12) en forme de fenêtre, le corps du pare-soleil (1) étant monté de façon rotative et également mobile axialement sur la branche longue (8) de l'axe de support (4), caractérisé en ce qu'un corps coulissant (18) guidé sans jeu dans le logement de palier tournant (3) est monté sur la région d'extrémité libre de la branche longue (8) de l'axe (4), en ce que la douille (28) comprend dans ses régions d'extrémité des épaulements (30) et dans la région situés entre eux au moins un à-plat (31) s'étendant axialement, et en ce que le logement de palier tournant (3) est recouvert à la manière d'un cavalier par un ressort (33) de forme sensiblement en U, qui sollicite la douille (28) au moins par une branche (32) qui traverse l'ouverture (12) en forme de fenêtre dans la région se trouvant entre les épaulements (30).

2. Pare-soleil selon la revendication 1, caractérisé en ce que la douille (28) comprend des saillies de glissement (29) disposées à ses extrémités, qui sont montées sans jeu sur la branche longue (8) de l'axe.

3. Pare-soleil selon la revendication 1 ou 2, caractérisé en ce que le corps coulissant (18) et les saillies de glissement (29) sont des éléments en matière plastique moulée par injection à coefficient de glissement élevé et à résistance à l'usure par frottement élevée.

4. Pare-soleil selon la revendication 1, 2 ou 3, caractérisé en ce que les saillies de glissement (29) sont formées directement par injection sur les régions d'extrémité de la douille (28) et présentent une section d'ouverture qui correspond au profil en section transversale de la branche longue (8) de l'axe.

5. Pare-soleil selon l'une quelconque des revendications 1 à 4, caractérisé en ce que le diamètre interne de la douille (28) qui est réalisée en un matériau métallique est supérieur au diamètre de la branche longue (8) de l'axe.

6. Pare-soleil selon l'une quelconque des revendications 1 à 5, caractérisé en ce que les épaulements (30) de la douille (28) sont constitués par les saillies de glissement (29) présentant également une forme de douille.

7. Pare-soleil selon l'une quelconque des revendications 1 à 6, caractérisé en ce que la branche longue (8) de l'axe supporte dans sa région d'extrémité libre un corps d'enclipsage pouvant être enclenché dans un évidement (26), et en être dégagé, à la manière d'un bouton-pression.

8. Pare-soleil selon la revendication 7, caractérisé en ce que l'évidement (26) est constitué par une ouverture de réception munie d'un rétrécissement interne (25), constituée dans un bouchon (13) fixé dans la région d'extrémité du logement de palier tournant (3).

9. Pare-soleil selon la revendication 7 ou 8, caractérisé en ce que la branche longue (8) de l'axe comprend dans sa région d'extrémité libre une partie en forme de gradin (17) se prolongeant par une tête de champignon (16), gradin à l'arrière duquel se dispose une collerette (21) orientée vers l'intérieur du corps coulissant (18), et en ce qu'à l'extrémité du corps coulissant (18) qui est située du côté de la collerette s'applique un manchon (22) qui forme le corps d'enclipsage et qui est monté sans pouvoir se déplacer sur la tête de champignon (16).

10. Pare-soleil selon la revendication 9, caractérisé en ce que le corps coulissant (18) est formé d'un seul tenant avec le manchon (22).

11. Pare-soleil selon l'une quelconque des revendications 1 à 10, caractérisé en ce que le logement de palier tournant (3) comprend une paroi interne lisse permettant un montage coulissant sans jeu du corps coulissant (18).

12. Pare-soleil selon l'une quelconque des revendications 1 à 11, caractérisé en ce que le logement de palier tournant (3) est constitué par une section d'un tube rond.

13. Pare-soleil selon l'une quelconque des revendications 1 à 11, caractérisé en ce que le logement de palier tournant (3) est constitué par une section d'un profilé extrudé qui comprend un corps rond fermé en soi et deux flasques (10) montés sur son enveloppe, les régions d'une garniture de renforcement (11) incorporée dans le corps (1) du pare-soleil étant fixées entre les flasques (10).

14. Pare-soleil selon l'une quelconque des revendications 1 à 13, caractérisé en ce qu'un corps de guidage (35) comprenant un alésage est monté dans l'extrémité du palier tournant qui est voisine de la branche courte (6) de l'axe, le diamètre de l'alésage étant adapté au diamètre de la branche longue (8) de l'axe.

Fig. 1

Fig. 3

Fig. 2

Fig. 4

0 149 073